# EUROPEAN PATENT APPLICATION

(11) **EP 4 465 315 A1**
(43) Date of publication of application: **20.11.2024**
(21) Application number: 23173633.1
(22) Date of filing: 16.05.2023
(51) Int. Cl.: H01G 2/08, H01G 11/08, H01G 11/16, H01G 11/18, H01G 11/84

(54) **METHOD TO DETECT A SIZE CHANGE IN AN ENERGY STORAGE DEVICE**

(71) Applicant: ABB SCHWEIZ AG, 5400 Baden (CH)
(72) Inventor: SCHLOTTIG, Gerd, 8142 Uitikon Waldegg (CH); PRIVITERA, Lorenzo, 5400 Baden (CH); HENCKEN, Kai, 79539 Lörrach (DE); WYSOCKI, Wojciech, 31-271 Kraków (PL); ADAMCZYK, Bartlomiej, 31-038 Kraków (PL)
(74) Representative: Maiwald GmbH

(57) **Abstract**

The invention relates to the field of energy storage devices, particularly for capacitors or accumulators. A method for estimating a present quality of the energy storage device (10) comprises the steps of:
measuring a first size change of a first surface of the energy storage device (10);
measuring a temperature and/or a second size change of a second surface of the energy storage device (10); and
estimating the present quality of the energy storage device (10), based on the first size change combined with the temperature and/or the second size change of the energy storage device (10).

## Description

### Field of the Invention

The invention relates to the field of energy storage devices, particularly for capacitors, batteries or accumulators. The invention further relates to a system, to a use and to a non-transitory computer-readable storage medium.

### Background

Energy storage devices, for instance capacitors or accumulators, may suffer from size changes, which may be caused, e.g., by moisture absorption by the energy storage device. The moisture absorption may lead to hygroscopic swelling, as an exemplary source of size change. This and/or the water uptake may lead to a worsened quality and/or, in at least some cases, to a damage of the energy storage device.

### Description

It is an objective of the invention to provide a method for estimating a present quality of an energy storage device. This objective is achieved by the subject-matter of the independent claims. Further embodiments are evident from the dependent claims and the following description.

One aspect relates to a method for estimating a present quality of an energy storage device, the method comprising the steps of:
measuring a first size change of a first surface of the energy storage device;
measuring a temperature and/or a second size change of a second surface of the energy storage device; and
estimating the present quality of the energy storage device, based on the first size change combined with the temperature and/or the second size change of the energy storage device.

The energy storage device may be a capacitor or an accumulator. The present quality of the energy storage device - sometimes also called its "decay status", "health status", or "degradation status" - may reflect its present ability to fulfil its function correctly and/or a risk of getting damaged. If, for example, a capacitor, whose metallic components are covered, coated, or laminated with a film comprising polymer, is exposed to humidity or moisture, water may be incorporated into the polymer. This, on the one hand, may worsen the present quality of this capacitor, e.g. by reducing its electric insulation resistance and/or by changing its dielectric properties. On the other hand, the water in the polymer film may, under voltage, be split (and/or due to another kind of reaction) to hydrogen. This, in at least some cases, led to an explosion, endangering the capacitor's surrounding. Hence, it is desirable to recognize the capacitor's quality decay early. This may also apply to other types of capacitors and/or accumulators.

An incorporating of water into the polymer, in many cases, leads to a swelling of the capacitor. For instance, a capacitor with a height of 50 mm may increase its size by, e.g., 5 µm to 2 mm, both on its upper and on its lower surface. However, a change of size, e.g. a swelling, of the capacitor may also be caused, e.g., by a higher temperature of the energy storage device, e.g. caused by the capacitor's environment and/or its load. Hence, an avoiding of a "false alarm" - by excluding a "not-dangerous" swelling or increase of size - has been recognized as being desirable as well. Thus, a hygroscopic, that is moisture-induced, swelling of one or several materials within the energy storage device may lead to a geometric change that may be detected. But, this is not unambiguous, because similar geometric changes may occur merely due to temperature distribution changes in the energy storage device.

The method measures a first size change of a first surface of the energy storage device and, optionally, a second size change of a second surface of the energy storage device. The first and the second surface are disjoint surfaces. The measurement of the first or second size change, respectively, may be conducted on the upper, the lower surface, and/or on at least one of the lateral surfaces of the energy storage device (the surfaces being disjoint). In at least some cases, measuring the upper surface may be preferred to the lower surface, e.g. due to spacing constraints. Depending on the type of the energy storage device and/or on the reason for its size change, the size change may be positive or negative, leading to an essentially convex or a concave, respectively, form of the surface. For the measurement, every device that is configured for detecting a size change or surface strain change may be used. Examples may comprise devices that measure a capacitive change, an inductive change and/or a resistive change. The capacitive change may be measured by measuring a distance between two opposing plates. The inductive change may be measured by measuring a shift of a metal in a coil. The resistive change may be measured by measuring the resistance change of a change in conductor cross section in a stretching or elongation, e.g. by a strain gauge.

The method measures a temperature of the energy storage device. The temperature of the energy storage device may be compared to and/or related to an ambient temperature of the device. The measurement of the temperature may be conducted on the upper, the lower surface, and/or on at least one of the lateral surfaces of the energy storage device. The temperature measurement may be conducted by any temperature sensor. For example, sensors that are in contact with the energy storage device may be used, e.g. a PTC (Positive Temperature Coefficient Thermistor), an NTC (Negative Temperature Coefficient Thermistor), or a thermocouple element, and/or devices that do not touch the energy storage device, e.g. a pyrometer.

The present quality of the energy storage device can, then, be estimated, based on the size change and/or the temperature of the energy storage device. For instance, if a size change (e.g. a swelling) can be related to a proportional temperature change, the present quality of the energy storage device or its damage risk may be evaluated differently than in cases when the temperature has stayed almost constant. As a consequence, this method provides not only a method for estimating a present quality of the energy storage device, but also reduces a risk of a "false alarm".

The present quality of the energy storage device may be evaluated, e.g., according to a category, e.g. a mark between 1 and 9, or a colour-category like "red/yellow/green". An example of the colour-category could be something like: "green, because expansion is only caused by higher temperature; yellow, because only slight increase; forecast for worsening time possible; red: crucial, maintenance required, danger".

In various embodiments, the method further comprises at least one step of: Outputting the estimating the present quality of the energy storage device, e.g. outputting to a display and/or to a database, sending a message, outputting an alarm; turning off a system that comprises the energy storage device; and/or turning on a cooling device and/or a moisture reduction means. Outputting the estimating the present quality of the energy storage device may be a basis for service measures, e.g. substituting at least the energy storage device, and/or a board (PCB) that holds the device, and/or further service measures. Furthermore, a predictive maintenance may be planned and/or done by the present quality and/or by a time-series or history of present quality estiamtions.

In various embodiments, the present quality of the energy storage device is estimated based on a ratio between the first and/or the second size change of at least one surface in a predefined timespan and a change of the temperature in said predefined timespan. By considering both the size change and the temperature of the energy storage device, the estimation quality may be significantly increased.

In various embodiments, the present quality of the energy storage device is estimated based on a ratio between the first size change of a lateral surface and the second size change of an upper or lower surface. In at least some cases, measuring the size change of the upper surface may be preferred to the lower surface, e.g. due to spacing constraints. Accordingly, an expansion of one surface, but contraction of another surface can be used to identify a moisture-driven size change at a given temperature - and/or to exclude other reasons -, particularly when thermal expansion can be expected at a given value.

In some embodiments, the present quality of the energy storage device is estimated based only on the temperature and/or a temperature gradient that is measured, to provide an indication of an alarm. This may be used to prevent serious failures and or to provide an early indication for then, e.g. for an overheating of the energy storage device.

In various embodiments, the present quality of the energy storage device is determined based on a plurality of historic data and/or of a simulation of the first and/or second size changes and/or temperatures. The historic data may be stored in a database, possibly specific for each kind of energy storage device. The database may be placed on a central server and/or close to the energy storage device, e.g. in a control unit that runs the method described above and/or below. Based on this, measured and metrics - e.g. a "normal" ratio of size changes and/or temperatures - may be computed, related to each other, and compared to values from stored model values and/or real-world values stored in the database. Thereby, an expansion of one surface, but contraction of another surface can be used to identify a moisture-driven size change at a given temperature, when thermal expansion can be expected at a given value.

In various embodiments, the energy storage device is a capacitor, particularly a film capacitor. The film may comprisepolypropylene (PP), polyethylene terephthalate (PET), polyethylene naphthalate (PEN), polyphenylene sulfide (PPS), polycarbonate (PC), functionally enhanced subvariants including nanostructured materials, another polymer, and/or a combination of these materials. For example, a polymer film type capacitor may serve as a filter capacitor, with a capacity between 1 µF and 5000 µF, particularly between 10 µF and 100 µF, and specified for a voltage between 100 V and 3000 V, e.g. for 350 V AC. Such a capacitor may have an edge length between 10 mm and 500 mm, particularly between 20 mm and 60 mm. The size change of such a capacitor may be below 2 mm, particularly below 1 mm, for each surface. The capacitor types may include electrolyte condensators.

In various embodiments, the energy storage device is an accumulator or a battery, particularly a battery cell. The accumulator or battery may, e.g., be specified for a voltage between 0.5 and 10V, and for a capacity between 1 Ah and 1000 Ah. The accumulator may have an edge length between 10 mm and 500 mm, particularly between 20 mm and 60 mm. The size change of such an accumulator may be below 2 mm, particularly below 1 mm, for each surface.

In various embodiments, the first and/or second size change is measured by a size change measuring unit, particularly by a device that measures a capacitive change, an inductive change and/or a resistive change. The capacitive change may be measured by measuring a distance of two opposite plates. The inductive change may be measured by measuring a shift of a metal in a coil. The resistive change may be measured by measuring a stretching or elongation, e.g. by a strain gauge.

In various embodiments, the temperature is measured by a temperature measuring unit, particularly by a sensor that is in contact with the energy storage device, and/or by a contactless sensor, which does not touch the energy storage device. An example for the sensor that is in contact may be, e.g., a PTC (Positive Temperature Coefficient Thermistor), an NTC (Negative Temperature Coefficient Thermistor), or a thermocouple element. An example for the contactless sensor is, e.g., an infrared sensor or a pyrometer. Further temperature measuring unit(s) may be used, e.g. for measuring an ambient temperature. Such a temperature measuring unit may be arranged at a sufficiently remote location, for example on the backside of a PCB. Furthermore, a system may be provided that is configured, e.g., to evaluate the difference between the said capacitor's temperature and said ambient temperature.

In some embodiments, measuring the first and/or second size change is performed by a ribbon-formed strain gauge arranged tightly around the energy storage device. Such a ribbon may advantageously be easy to apply and thus, reduce the manufacturing costs for conducting a method as described above and/or below.

In various embodiments, the measuring the first and/or second size change and measuring the temperature of the energy storage device is performed by a combined sub-system. The combined sub-system comprises the temperature measuring unit arranged on a surface of the energy storage device; an elastic plate, designed as a U-cutout or an H-cutout of a surrounding plate, and the size change measuring unit arranged on the elastic plate. And, the temperature measuring unit is in mechanical contact with both the surface and the elastic plate, so that each size change of the surface of the energy storage device leads to a size change of the elastic plate.

The "combined size-temperature-change sub-system" may build a module. The size change measuring unit may be arranged on one side of the elastic plate or on both sides. In case of using two change measuring units, they may be arranged as part of a Wheatstone bridge, thus increasing its sensitivity. The size change measuring unit may be arranged, e.g. by gluing (for example using a heat-coupling glue, e.g. a zero-shrink adhesive), by welding, soldering, sintering, using thin-film technology and/or by other fixation means.

In an embodiment, the elastic plate that is designed as a U-cutout has the size change measuring unit arranged on an upper side and/or on a lower side of the elastic plate.

In an embodiment, the elastic plate that is designed as an H-cutout has the size change measuring unit arranged on an upper side and/or on a lower side of the elastic plate and/or between the tips of the elastic plate. This may advantageously further increase the sensitivity of the change measuring unit.

In some embodiments, the first and/or second size change is measured for a plurality of energy storage devices. In these embodiments, only one temperature measuring unit may be provided, and/or several temperature measuring units may be provided, and only one of them (e.g. the one with the highest temperature) is used for estimating the present quality of the energy storage device. This solution may save cost, because fewer elements are needed. And, in case of a significant degradation of at least one of the energy storage devices, in at least some cases the complete "block" is removed for service, repair and/or substitution. In cases a strain gauge is used that wraps around or covers multiple surfaces of one capacitor or a plurality of capacitors, in particular in immediate contact and/or attachment means mediated contact of as much surface as possible, the measurement sensitivity may be increased by this.

An aspect relates to a combined sub-system as described above and/or below, i.e. a "combined size-temperature-change sub-system", for measuring a first and/or a second size change and a temperature of the energy storage device. This subsystem may be designed as a module, e.g. for enhancing its applicability.

An aspect relates to a system for estimating a decay status of an energy storage device, the system comprising: the energy storage device; a size change measuring unit; a temperature measuring unit; and a control unit, configured for conducting any one of the methods described above and/or below.

An aspect relates to a use of a system as described above and/or below for estimating a decay status of an energy storage device for predicting the remaining useful life of the capacitors and/or for estimating a moisture absorption by a capacitor.

An aspect relates to a non-transitory computer-readable storage medium having a program stored therein, which, when executed on a processor of a control unit instructs the control unit to perform a method as described above and/or below.

It should be noted that two or more embodiments described above and/or below can be combined, as far as technically feasible.

For further clarification, the invention is described by means of embodiments shown in the figures. These embodiments are to be considered as examples only, but not as limiting.

### Brief Description of the Drawings

The drawings depict:
- **Fig. 1a, 1b, 1c**: schematically size changes of a surface of an energy storage device;
- **Fig. 2**: schematically a system according to an embodiment;
- **Fig. 3a, 3b**: schematically a part of a system according to an embodiment;
- **Fig. 4**: schematically a further part of a system according to an embodiment;
- **Fig. 5**: a flow diagram according to an embodiment.

### Detailed Description of Embodiments

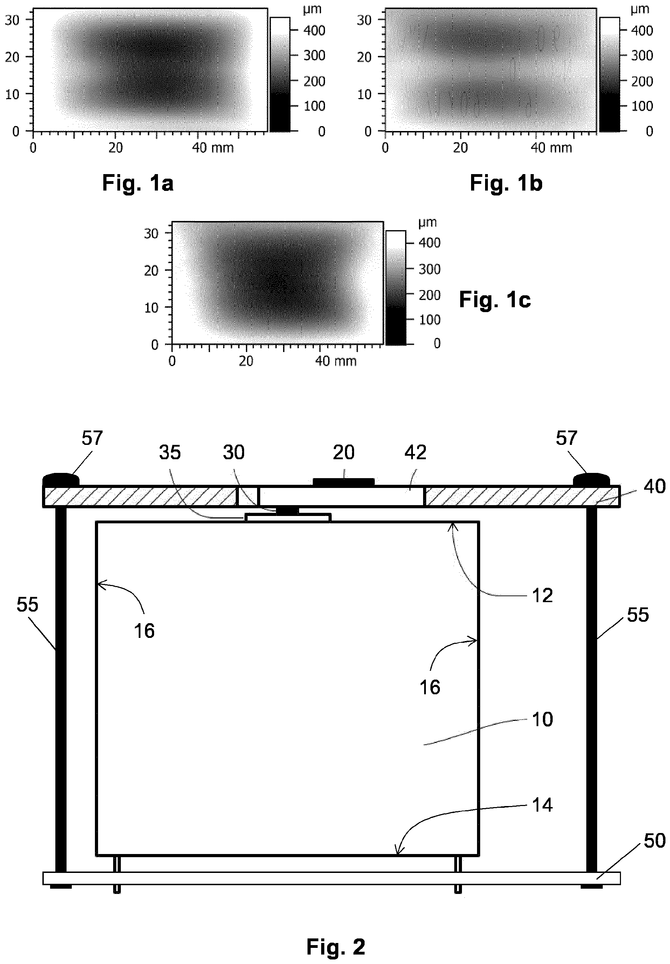

**Fig. 1a, 1b,** and **1c** show schematically a profile of a surface of three different energy storage devices after the devices underwent a size change. The brighter the area shown is, the more elevation the surface shows, compared to its lowest points. The pictures shown depict an upper surface - an area of about 30 mm x 50 mm - of several types of capacitors. The differences of the arrangement within the capacitor lead to several different patterns. **Fig. 1a** shows about 300 µm elevation difference with a less deep centre line. **Fig. 1b** shows about 150 µm elevation difference with a pronounced centre line. **Fig. 1c** shows about 300 µm elevation without a centre line.

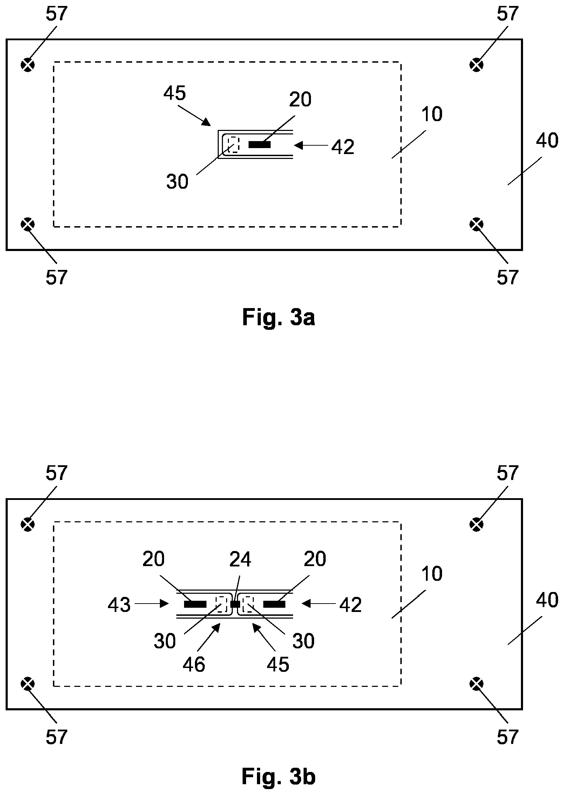

**Fig. 2** shows schematically a system according to an embodiment, in a side view. An energy storage device 10, e.g. a capacitor, is arranged on a PCB (Printed Circuit Board) 50, e.g. by soldering. The energy storage device 10 has a top surface 12, a bottom surface 14 and (e.g. four) lateral surfaces 16. The system further comprises a plate 40 that is mounted on top of the energy storage device 10. On the top surface 12, a temperature measuring unit 30 is arranged, e.g. by means of a thermal interface material 35. The thermal interface material 35 may be a glue (for example using a heat-coupling glue), or the temperature measuring unit 30 is arranged by welding, etc. The temperature measuring unit 30 is in mechanical contact with both the surface 12 and an elastic plate 42, which is a part of the (surrounding) plate 40. The elastic plate 42 may be designed as a U-cutout or an H-cutout of the surrounding plate 40; see e.g. **Fig. 3a** or **Fig. 3b****,** respectively. Due to this arrangement, that each size change, e.g. a raising or lowering, of the surface 12 of the energy storage device 10 leads to a raising or lowering of the elastic plate 42. This bending of the elastic plate 42 can be measured by at least one size change measuring unit. The plate 40 has a distinct distance to the top surface 12, to keep a tight contact between the surface 12 and the elastic plate 42, via the temperature measuring unit 30 and the thermal interface material 35. The distinct distance between the top surface 12 and the plate 40 may be realised by a distance rod 55, e.g. mounted by screws (screw head 57 visible in **Fig. 2**) on the PCB 50 and penetrating through the plate 40.

**Fig. 3a** and **3b** show schematically a part of a system according to an embodiment, in a top view. In this top view, the plate 40 (cf. **Fig. 2**) is visible; the energy storage device 10, arranged below said plate 40 is not visible and, thus, drawn with broken lines. In **Fig. 3a****,** the plate 40 is shown with a U-cutout 45, thus building the elastic plate 42. On top of the elastic plate 42, the size change measuring unit 20 - e.g. a strain gauge - is arranged. Additionally or as an alternative, another size change measuring unit may be arranged below the elastic plate 42 (not visible). Also below the elastic plate 42, the temperature measuring unit 30 is arranged, which is in mechanical contact with both the surface 12 and the elastic plate 42 (see **Fig. 2**). Since the temperature measuring unit 30 is not visible in a top view, it is also drawn with broken lines. Furthermore, screw heads 57 of the distance rod 55 (not visible) are depicted.

**Fig. 3b** is quite similar to **Fig. 3a**; the same or similar elements are given the same reference signs. **Fig. 3b** shows the plate 40 with a further cutout 46, i.e. an H-cutout, thus building elastic plates 42 and 43. The H-cutout has the size change measuring unit 20 arranged on an upper side and/or on a lower side of the elastic plates 42 or 43 (similar to the arrangement with a U-cutout). Additionally or as an alternative, there may be a size change measuring unit 24 arranged between the tips of the elastic plates 42 and 43. This embodiment may have two temperature measuring units 30, or only one temperature measuring unit and a "dummy unit", which only functions for maintaining a tight contact between the surface 12 and the elastic plate 42 or 43, respectively.

For embodiments, which use as the change measuring unit 20 a device that measures a capacitive change, a capacitive plate (not shown) may be arranged over or under the plate 40. A capacitive plate arranged over the plate 40, measures a movement of the elastic plate 42. A capacitive plate arranged under the plate 40, may substitute the elastic plate 42 by an elastic capacitive plate that is in mechanical contact with the surface 12, via the temperature measuring unit 30. In this embodiment, the plate 40 does not need any cutouts.

For embodiments, which use as the change measuring unit 20 a device that measures an inductive change, a ferromagnetic rod may be arranged on the cutout 45 and/or 46, or directly on the temperature measuring unit 30., e.g. on an area close to its tip (or their tips), wherein the ferromagnetic rod is moveable within a coil.

Some of the components shown in **Figs. 2****,** **3a, 3b** may be provided as a combined sub-system, which may comprise the temperature measuring unit 30 arranged on a surface 12, 14, 16 of the energy storage device 10; an elastic plate 42, designed as a U-cutout or an H-cutout of a surrounding plate 40; and the size change measuring unit 20 arranged on the elastic plate 42, wherein the temperature measuring unit 30 is in mechanical contact with both the surface and the elastic plate 42, so that each size change of the surface of the energy storage device 10 leads to a size change of the elastic plate 42. Such a combined sub-system may be provided as a module, which could be arranged in a simple way - e.g. by gluing it below a rectangle cutout of plate 40 - between the surface 12, 14, 16 of the energy storage device 10 and said plate 40.

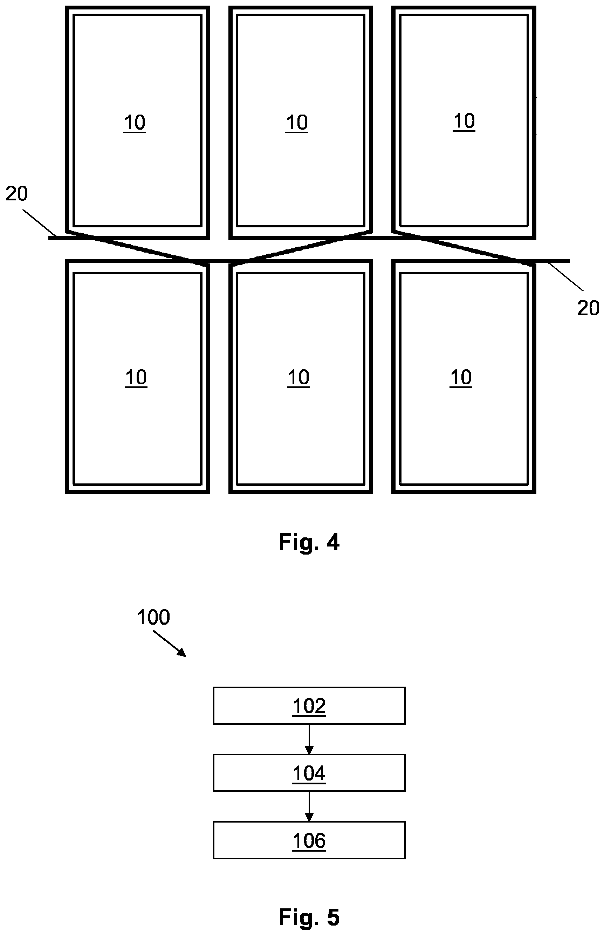

**Fig. 4** shows schematically a further part of a system according to an embodiment. **Fig. 4** shows an arrangement with a plurality of energy storage devices 10. Around the plurality of energy storage devices 10, a ribbon-formed size change measuring unit 20, e.g. a strain gauge, is arranged tightly.

**Fig. 5** shows a flow diagram 100 according to an embodiment. In a step 102, a size change of at least one surface of the energy storage device 10 (see, e.g., **Fig. 2**) is measured. In a step 104, a temperature of the energy storage device 10 is measured. In a step 102, a present quality of an energy storage device 10 is estimated, based on the size change and/or the temperature of the energy storage device 10.

Further steps, based on the estimating of the present quality of the energy storage device 10, may comprise: outputting the estimating the present quality of the energy storage device 10; turning off a system that comprises the energy storage device 10; and/or turning on a cooling device and/or a moisture reduction means.

### List of Reference Symbols

- 10: energy storage device
- 12, 14, 16: top / bottom / lateral surface
- 20: size change measuring unit
- 30: temperature measuring unit
- 35: thermal interface material
- 40: surrounding plate
- 42: elastic plate
- 43: further elastic plate
- 45: cutout
- 46: further cutout
- 50: PCB (Printed Circuit Board)
- 55: distance rod
- 57: screw head

## Claims

1. A method for estimating a present quality of an energy storage device (10), the method comprising the steps of:
measuring a first size change of a first surface of the energy storage device (10);
measuring a temperature and/or a second size change of a second surface of the energy storage device (10); and
estimating the present quality of the energy storage device (10), based on the first size change combined with the temperature and/or the second size change of the energy storage device (10).

2. The method of claim 1,
further comprising at least one step of:
outputting the estimating of the present quality of the energy storage device (10);
turning off a system that comprises the energy storage device (10); and/or
turning on a cooling device and/or a moisture reduction means.

3. The method of any one of the preceding claims,
wherein the present quality of the energy storage device (10) is estimated based on a ratio between the first and/or the second size change of at least one surface in a predefined timespan and a change of the temperature in said predefined timespan.

4. The method of any one of the preceding claims,
wherein the present quality of the energy storage device (10) is estimated based on a ratio between the first size change of a lateral surface and the second size change of a upper or lower surface.

5. The method of any one of the preceding claims,
wherein the present quality of the energy storage device (10) is determined based on a plurality of historic data and/or of a simulation of the first and/or second size changes and/or temperatures.

6. The method of any one of the preceding claims,
wherein the energy storage device (10) is a capacitor, particularly a film capacitor, the film comprising polypropylene (PP), polyethylene terephthalate (PET), polyethylene naphthalate (PEN), polyphenylene sulfide (PPS), polycarbonate (PC), functionally enhanced subvariants including nanostructured materials, another polymer, and/or a combination of these materials, and/or the energy storage device (10) is an accumulator or a battery, particularly a battery cell.

7. The method of any one of the preceding claims,
wherein the first and/or second size change is measured by a size change measuring unit (20), particularly by a device that measures a capacitive change, an inductive change and/or a resistive change, and/or
wherein the temperature is measured by a temperature measuring unit (30), particularly by a sensor that is in contact with the energy storage device, and/or by a contactless sensor.

8. The method of any one of the preceding claims,
wherein measuring the first and/or second size change is performed by a ribbon-formed strain gauge arranged tightly around the energy storage device (10).

9. The method of any one of the preceding claims,
wherein measuring the first and/or second size change and measuring the temperature of the energy storage device (10) is performed by a combined sub-system,
wherein the combined sub-system comprises:
the temperature measuring unit (30) arranged on a surface (12, 14, 16) of the energy storage device (10);
an elastic plate (42), designed as a U-cutout or an H-cutout of a surrounding plate (40); and
the size change measuring unit (20) arranged on the elastic plate (42),
wherein the temperature measuring unit (30) is in mechanical contact with both the surface and the elastic plate (42), so that each of the first and/or second size change of the surface of the energy storage device (10) leads to a size change of the elastic plate (42).

10. The method of claim 9,
wherein the elastic plate (42) that is designed as a U-cutout has the size change measuring unit (20) arranged on an upper side and/or on a lower side of the elastic plate (42), and/or
wherein the elastic plate (42) that is designed as an H-cutout has the size change measuring unit (20) arranged on an upper side and/or on a lower side of the elastic plates (42, 43) and/or between the tips of the elastic plates (42, 43).

11. The method of any one of the preceding claims,
wherein the first and/or second size change is measured for a plurality of energy storage devices (10).

12. A combined sub-system according to claim 9 or 10 for measuring a first and/or a second size change and a temperature of the energy storage device (10).

13. A system for estimating a present quality of an energy storage device (10), the system comprising:
the energy storage device (10);
a size change measuring unit (20);
a temperature measuring unit (30); and
a control unit, configured for conducting any one of the claims 1-11.

14. Use of a system according to claim 13 for estimating a present quality of an energy storage device (10) for predicting the remaining useful life of the capacitors and/or for estimating a moisture absorption by a capacitor.

15. A non-transitory computer-readable storage medium having a program stored therein, which, when executed on a processor of a control unit instructs the control unit to perform a method according to any one of claims 1-11.
